# EUROPEAN PATENT APPLICATION

(11) **EP 2 889 226 A1**
(43) Date of publication of application: **01.07.2015**
(21) Application number: 12883147.6
(22) Date of filing: 22.11.2012
(51) Int. Cl.: B65B 31/02, C12H 1/14, B67C 3/10

(54) **PACKAGING FOR CONTAINING AND EXTRACTING A FIZZY BEVERAGE**

(30) Priority: 24.08.2012 BR 102012021408
(71) Applicant: Fezer, Gustavo Foresti, 89500-000 Caçador - Santa Catarina (BR)
(72) Inventor: Fezer, Gustavo Foresti, 89500-000 Caçador - Santa Catarina (BR)
(74) Representative: Girardi, Giovanna Paola
(86) International application number: PCT/BR2012/000462
(87) International publication number: WO 2014/028988

(57) **Abstract**

It is described a packaging for filling and extraction of carbonated beverage, preferably draught beer and beer, with addition of an appropriate gas for beverages with low solubility in the carbonated liquid, preferably nitrogen, and the said gas be deposited directly into the filling packaging and filling in contact with carbonated liquid, without being stored in external recipient or in internal device pressure regulator of the packaging, and said packaging include a body (10) provided with a hole where is positioned an extractor valve (20) coupled in a siphon tube (30) sized for the release of carbonated beverages without excessive foaming, whose siphon tube (30) presenting reason between measure diameter of siphon (30) and the respective measure of length up to 2,0%.

## Description

### FIELD OF INVENTION

The present invention describes a packaging for filling and extraction of carbonated beverage. More specifically consists in a packaging with an extract valve and siphon (collector tube) which permits the potting, and then serves divided doses of carbonated drinks, as beer and draught beer.

### BACKGROUND OF THE INVENTION

The draught beer is a carbonated drink that differs of beer by the absence of pasteurization. The pasteurization of beer changes, even slightly, her organoleptics characteristics (scent and flavor).

Conventionally the draught beer is bottled in barrels to keep fresh their original characteristics (color, quantity of gas solution, yeast, scent and flavor).

Currently, to serve draught beer or beer are used basically four methods of extraction. The most common method consists in a barrel, containing draught beer, to be pressurized by an external gas cylinder fitted with a pressure regulating valve. In this situation, the costumer needs to have extraction equipments (tap valve), equipment to cool the liquid (beer cooler), gas cylinder with pressure regulating valve and also knowledge, to assemble and regulate the system, that is dependent on variables as CO₂ content (carbonic gas) of beer, the storage temperature, the choice of tap, height of pipe, length of pipe, internal diameter of pipe, and the correct cleaning of all equipment.

The second extraction method is a manual pumping atmospheric air into the barrel.

A third extraction method consists in put taps under the barrels where the liquid is drained by gravity, allowing passive entry of atmospheric air.

In the second and third methods of extraction, the atmospheric air contaminates of the atmosphere of the interior of barrel, coming in contact with the liquid stored in the pack, causing organoleptics changes in the product due the oxidation. Therefore, in these situations, the consumption must be quick, not being advised the fractionated consumption over days, with storage of the draught beer in contact with the contaminated atmospheric of the barrel due the atmospheric air.

A fourth method of draught beer extraction, is commercially known as *DraughtKeg Heineken®* (WO2009126034), and describes a barrel that presents an internal structure with active carbon dioxide, which keeps the draught beer under constant pressure, allowing the complete outflow of the product; is also provided a control valve that maintains the pressure at approximately 1.0 bar. In this technical solution, the set of elements works well, but their cost is high considering that the packaging is disposable.

Although the first and the fourth method of draught beer extraction permits the fractionated consumption without changing the organoleptics characteristics. In the first method of extraction, the user needs to have skill and knowledge of pressure of carbonic gas saturation in relation to beverage temperature and other characteristics of system, as mentioned above to do not occur problems in the liquid extraction, such as over-carbonation, with too much foaming. About the fourth method of draught beer extraction, the fractionated consumption is attained, but due its agregated technology the cost is too high for a disposable apparatus.

An alternative solution with a low cost to the filling of carbonated beverage is the utilization of bottles which contains valve-siphon, commercially used to condition mineral water with gas (soda). In this product, the mineral water is carbonated by forced carbonation of CO₂ and the packages are sold pressurized with CO₂. However, this system do not permits the filling of draught beer or beer, because the CO₂ in high pressure causes over-carbonation in the liquid, forming 100% of foam when served, due the high solubility of carbonic gas in the beverage. So, to reduce the effect of over-carbonation, due excess of CO₂, could be used as option a gas beverage with low solubility, as the nitrogen, to pressure the filling. However, even with the use of nitrogen, the siphon of this commercial packaging is not dimensioned correctly to extract the draft beer or beer, serving the product with excessive foam.

The excess of foam generated by mistakes of equipment manipulation at first extraction method of draught beer, or in the use of an alternative solution of carbonated beverages package in bottles of water which has a siphon-valve, and/or the over-carbonation may interfere negatively in the sensory analysis of beers (VENTURINI Filho, Waldemar G.: CEREDA,Marney P. Hydrolyzate of cassava starch as an adjunct malt in brewing: Chemical and sensory evaluation. Ciênc. Tecnol. Aliment. vol.18 n.2 Campinas May/July 1998).

In this way, the prior art does not describe or suggest packaging of filling and extraction of a carbonated beverage, mainly draught beer or beer, with the addition of an appropriate gas to beverages and with low solubility in the liquid, such as nitrogen, directly into the package and in contact with the carbonated liquid without be stored in other recipient, or in device for regulating of internal pressure of the package, presenting an extractor valve and a siphon tube scaled to liberation of beverages without excess of foam, in a simple operation, preserving the organoleptics characteristics and allowing the fractional consumption.

### ABSTRACT

The invention provides a packaging for filling and extraction of carbonated beverage, mainly draught beer and beer, which presents the quantity enough of gas to the extraction and the consumption.

The invention provides a packaging for filling and extraction of carbonated beverage, mainly draught beer and beer, that permits the fractioned consumption, without injury to organoleptics characteristics of the product and without risk of oxidation, due the fact of content inside the bottle be under pressure and do not allow the entry of atmospheric air.

The invention provides a package to bottle and extraction of carbonated beverage with the addition of an appropriate gas to carbonated beverages and allow solubility liquid, mainly nitrogen, with the function to transport the carbonated liquid into the bottle, has an extractor valve and siphon tube dimensioned for extraction of draught beer and beer without excess of foam.

The invention provides a packaging for filling and extraction of carbonated beverage, mainly draught beer and beer, which does not require additional source of gas, whether internal or external.

The invention provides a package for filling and extraction of carbonated beverage with low price and easy work, allowing to become popular the consumption of draught beer and open market share.

The invention provides a package for filling and extraction of carbonated beverage that could be disposable or reusable.

### BRIEF DESCRIPTION OF THE DRAWINGS

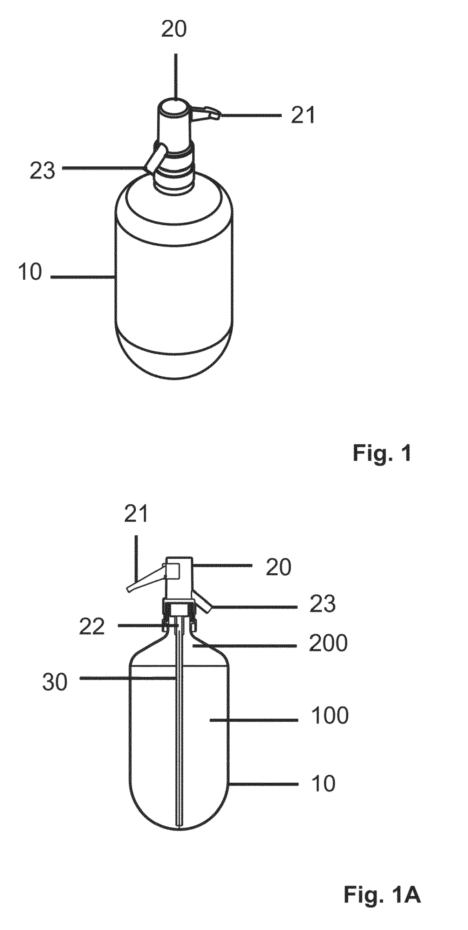

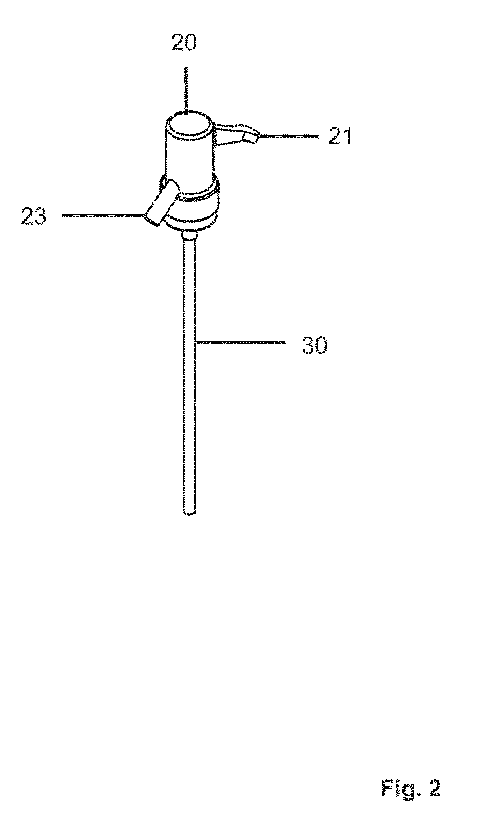

The figure 1 shows a view of perspective of the packaging equipped with an extractor valve and siphon tube, and the figure 2 shows a view cropped.

The figure 2 shows in details the coupling of siphon tube at extractor valve.

### DETAILED DESCRIPTION OF THE INVENT

The packaging for filling and extraction of carbonated beverage, object of this invention, include a body (10) provided with a hole where is positioned an extractor valve (20) coupled in a siphon tube (30).

The extractor valve (20) has means of retention (not represented) of internal pressure triggered through an external maniple (21) of manual action, that permits the liberation or shutdown of access channel (22) of the carbonated liquid into the body (10) to the external ambient; said extractor valve (20) is connected in a siphon tube (30), with enough diameter restriction which is enable to serve the product without excess of foam.

The filling is preferably made by a nozzle (23) of extractor valve (20) where the carbonated liquid (100) enter by pressure in the siphon tube (30). Alternatively, the carbonated liquid (100) could be bottled into the body (10), through the hole provided in said body (10), then coupled the set of extractor valve (20) and siphon tube (30).

The siphon tube (30) is connected to channel (22) of the extractor valve (20), said siphon tube (30) is positioned at the internal region of the body (10) between the base and the inner end of the extraction valve (20).

In the present invention, the term "restriction of enough diameter" means ratio of the diameter of the siphon (30) and the respective measure of length, with value up to 2.0%.

Preferably, the siphon tube (30) presents the measure of diameter equivalent to 0,7% of its measure of length.

To the filling, the internal atmosphere of the body(10) receive an appropriate gas (200) for beverages with low liquid solubility, preferably nitrogen, before and/or after the addition of carbonated liquid; said gas (200) has the function to push the liquid (100) to the external region of the body (10) through the set of extractor valve (20) and siphon tube (30). The gas (200), in this case nitrogen, due their low solubility, is used to transport the carbonated liquid, differently of the carbonic gas which in high pressure solubilizes in liquid especially at low temperatures which prevents the proper maintenance of the pressure of the carrier gas, and over carbonate the beverages creating excess of foam, altering the sensory characteristics of the product. Preferably, the body (10) is made in polymeric material, metal or glass.

In case of packing made of polymeric material, as PET (Polyethylene terephthalate), should be provided barrier protective about the permeability of gases (oxygen input and output internal gases) and entrance of light ((KUNZE, Wolfgang. Technology Brewing & Malting. 4 ed., 2010).

In case of packaging made of glasses, should provide film coating to prevent accidents, during the process, transport and consumption.

## Claims

1. **PACKAGING FOR FILLING AND EXTRACTION OF CARBONATED BEVERAGE,** which include a body (10) provided with a hole where is positioned an extractor valve (20) coupled in a siphon tube(30), whose extractor valve (20) presents means of retention (do not represented) of internal pressure triggered manually by an external maniple (21) which permits the liberation or shutdown of the access channel (22) of the carbonated liquid from the inside of the body (10) to the nozzle (23), and said extraction valve (20) is connected to a siphon tube (30) positioned in the internal region of body (10) between the base and the inner end of the extraction valve (20), **characterized by** the fact the siphon tube (30) have ratio of its length measure up to 2,0% and be added a suitable gas (200) for beverages with low solubility in liquid carbonated bottled.

2. **PACKAGING FOR FILLING AND EXTRACTION OF CARBONATED BEVERAGE**, according to claim 1, **characterized by** the fact the siphon tube(30), have measure of diameter corresponding to 0,7% of the length measure.

3. **PACKAGING FOR FILLING AND EXTRACTION OF CARBONATED BEVERAGE**, according to claim 1, **characterized by** the fact of gas (200) be preferably nitrogen (200).

4. **PACKAGING FOR FILLING AND EXTRACTION OF CARBONATED BEVERAGE,** according to claim 1, **characterized by** the fact of gas (200) be added before and/or after the addition of carbonated liquid in the region internal of body (10).
